# EUROPÄISCHE PATENTSCHRIFT

(11) **EP 3 170 287 B1**
(45) Veröffentlichungstag und Bekanntmachung des Hinweises auf die Patenterteilung: **27.04.2022**
(21) Anmeldenummer: 15739558.3
(22) Anmeldetag: 15.07.2015
(51) Int. Cl.: H04L 12/40, G05B 19/418, G05B 9/03

(54) **STEUER- UND DATENÜBERTRAGUNGSSYSTEM, GATEWAY-MODUL, E/A-MODUL UND VERFAHREN ZUR PROZESSSTEUERUNG**
CONTROL AND DATA-TRANSFER SYSTEM, GATEWAY MODULE, I/O MODULE, AND METHOD FOR PROCESS CONTROL
SYSTÈME DE COMMANDE ET DE TRANSMISSION DE DONNÉES, MODULE DE PASSERELLE, MODULE E/A ET PROCÉDÉ DE COMMANDE DE PROCESSUS

(30) Priorität: 16.07.2014 DE 102014110017
(43) Veröffentlichungstag der Anmeldung: 24.05.2017
(73) Patentinhaber: Phoenix Contact GmbH & Co. KG, 32825 Blomberg (DE)
(72) Erfinder: HELLMANN, Klas, 31787 Hameln (DE); OSTER, Viktor, 32825 Blomberg (DE)
(74) Vertreter: Blumbach · Zinngrebe Patentanwälte PartG mbB
(86) Internationale Anmeldenummer: PCT/EP2015/066205
(87) Internationale Veröffentlichungsnummer: WO 2016/008948

(56) Entgegenhaltungen:
- EP-A1- 1 251 416
- EP-A1- 2 348 373
- EP-A2- 2 667 304
- WO-A1-2006/008257
- DE-A1- 19 939 567

## Beschreibung

Die Erfindung betrifft allgemein die Automatisierungstechnik, und insbesondere ein Steuer- und Datenübertragungssystem zum Steuern von sicherheitskritischen Prozessen mit einer Mehrzahl von Eingangs- und/oder Ausgangs-Modulen, welche über ein Kommunikationsnetzwerk mit einem Gateway-Modul verbunden sind, sowie ein Verfahren zur sicheren Prozesssteuerung.

In der Automatisierungstechnik erfolgt die Prozesssteuerung häufig mittels einer Steuereinrichtung, die über ein Kommunikationssystem mit dezentralen Eingangs- und Ausgangs-Modulen, oder kurz E/A-Modulen, verbunden ist. Die Anbindung an den zu steuernden Prozess erfolgt mittels Sensoren und Aktoren, welche jeweils an entsprechende E/A-Module angeschlossen sind, wobei die E/A-Module Eingangsdaten von Sensoren empfangen und Ausgangsdaten an Aktoren ausgeben.

Das Kommunikationssystem kann beispielsweise als Feldbussystem ausgebildet sein. Auch kann eine hierarchische Kommunikationsstruktur vorgesehen sein, wobei unterschiedliche Kommunikationsnetzwerke mittels eines Gateway-Moduls miteinander verbunden sein können. Bekannt ist beispielsweise der Einsatz modularer Stationen, welche einen Buskoppler und eine Mehrzahl von E/A-Modulen, beispielsweise in Form elektronischer aufsteckbarer Module, umfassen, wobei die Kommunikation zwischen Buskoppler und E/A-Modulen üblicherweise über einen lokalen Bus erfolgt, und der Buskoppler über eine Schnittstelle zu einem überlagerten Feldbus verfügt. Die Verbindung innerhalb des lokalen Busses kann dabei kabellos über Kontakte erfolgen, wobei zu diesem Zweck der Buskoppler und die E/A-Module auf eine Tragschiene, insbesondere eine DIN-Hutschiene aufgerastet werden. Ein Gateway-Modul, welches den Buskoppler umfasst und den lokalen Bus mit einem hierarchisch übergeordneten Kommunikationsnetzwerk verbindet, wird in diesem Zusammenhang auch als Busklemme bezeichnet.

Häufig ist es notwendig, Sicherheitsfunktionen zum Schutz von Mensch, Maschine oder Umwelt zu realisieren, wie die Abschaltung einer Maschine nach Öffnen einer Schutztür oder Betätigung eines Not-Aus-Schalters. Die von Sicherheitsfunktionen verarbeiteten bzw. erzeugten und somit sicherheitsrelevanten Eingangs- und Ausgangsdaten werden in der Regel mittels fehlersicherer E/A-Module verarbeitet und unter Verwendung eines fehlersicheren Übertragungsprotokolls zwischen Steuerung und E/A-Modulen ausgetauscht.

Bekannte Standards für die Entwicklung von elektrischen, elektronischen und programmierbar elektronischen Systemen, die eine Sicherheitsfunktion ausführen, sind beispielsweise IEC 61508 und ISO 13849.

Die Druckschrift EP 2 348 373 A1 offenbart die Diagnose von Kommunikationsverbindungen in einem Kommunikationssystem, das einen Master und angeschlossene Slaves umfasst.

Die Druckschrift EP 2 667 304 A2 offenbart ein System mit einer Diagnoseeinheit und E/A-Modulen zum Erfassen von Eingangs- Peripheriesignalen und/oder zum Ausgeben von Ausgangs- Peripheriesignalen.

Die Druckschrift EP 1 251 416 A1 offenbart eine Diagnose-Einrichtung, welche Diagnoseinformationen, Parameter, und Peripherieeigenschaften auf eine Anzeigevorrichtung zur Anzeige und Auswertung ausgibt.

Die Druckschrift DE 199 39 567 A1 offenbart eine Vorrichtung zum Steuern von sicherheitskritischen Prozessen, mit einer sicheren Steuerungseinheit zum Steuern der sicherheitskritischen Prozesse und mit zumindest zwei sicheren Signaleinheiten, die über E/ A- Kanäle mit den sicherheitskritischen Prozessen verbunden sind, wobei die sichere Steuerungseinheit und die sicheren Signaleinheiten an einen gemeinsamen Feldbus angeschlossen sind.

Die Druckschrift WO 2006/008257 A1 offenbart eine Ein-/ Ausgabebaugruppe für ein sicherheitsgerichtetes Automatisierungssystem.

Für die Erfassung sicherheitsrelevanter Signale werden derzeit spezielle, sichere Eingangs- und Ausgangsmodule verwendet, bei denen die Signale redundant erfasst und innerhalb des Gerätes auf Plausibilität und Fehler überprüft werden. Dazu sind mindestens zwei, typischerweise mit Mikroprozessoren aufgebaute Kerne bzw. Kanäle notwendig, in denen die erfassten Daten zweikanalig bearbeitet und gegeneinander verglichen werden. Im Weiteren erfolgt die Umsetzung der Sicherheitskommunikation separat in jedem Modul. In modular aufgebauten Stationen mit mehreren Modulen werden in der Regel mehrere solche sicheren Eingangs- und Ausgangsmodule verwendet, die unabhängig voneinander arbeiten und individuell von der überlagerten Steuerung angesprochen werden.

Die modular aufgebauten Stationen umfassen daneben in der Regel auch Module zur Erfassung von nicht sicherheitsrelevanten Signalen, welche typischerweise einkanalig ausgebildet sind, sowie mindestens ein Gateway-Modul zur Ankopplung der Station an das jeweils verwendete übergeordnete Netzwerk. Das Gateway-Modul ist ebenfalls insoweit ein intelligentes Gerät, als dass in diesem die Daten aus den lokalen E/A-Modulen an das verwendete Netzwerk angepasst und entsprechend umgerechnet werden.

Es werden somit unterschiedliche E/A-Module für sicherheitsrelevante und nicht sicherheitsrelevante Signale eingesetzt. Dadurch erhöht sich der Aufwand in Entwicklung, Herstellung, Logistik, Schulung und in allen die Automatisierung betreffenden Aspekten. Zudem vervielfältigt sich die Zahl der mit Mikroprozessoren aufgebauten Kerne innerhalb einer solchen Station mit jedem weiteren Modul, was diese ebenfalls technisch und kommerziell aufwändiger macht. Zusätzlich ist je nach verwendetem Netzwerk für die Übertragung der sicheren Signale ein anderes sicheres Protokoll zu implementieren. Dieses erhöht die Varianz der Module weiter.

Der Erfindung liegt die Aufgabe zugrunde, einen Weg aufzuzeigen, wie an ein Automatisierungssystem gestellte Sicherheitsanforderungen gegenüber dem Stand der Technik verbessert, optimiert oder auf flexiblere Weise erfüllt werden können.

Die oben genannte technische Aufgabe wird zum einen durch die Merkmale des Anspruchs 3 gelöst.

Dementsprechend sieht die Erfindung ein Steuer- und Datenübertragungssystem zum Steuern von sicherheitskritischen Prozessen vor, welches zumindest eine Mehrzahl von E/A-Modulen umfasst, welche über ein erstes Kommunikationsnetzwerk mit einem Gateway-Modul verbunden sind, wobei das Gateway-Modul mit einem zweiten, dem ersten hierarchisch übergeordneten Kommunikationsnetzwerk verbunden ist und als Gateway zwischen dem ersten und zweiten Kommunikationsnetzwerk wirkt. Wenigstens eines der E/A-Module umfasst eine Diagnoseeinheit zum Erzeugen von Statusdaten betreffend den Funktionszustand eines Ein- und/oder Ausgangs und/oder einer an einen Ein- oder Ausgang angeschlossenen Prozesseinrichtung. Ferner sind das Gateway-Modul und die E/A-Module dazu ausgebildet, über das erste Kommunikationsnetzwerk fehlergesichert zu kommunizieren, um Statusdaten und Eingangs- und/oder Ausgangsdaten zu übertragen. Das Gateway-Modul ist ferner zur sicherheitsgerichteten Verarbeitung der Statusdaten und/oder der Eingangs- und/oder Ausgangsdaten ausgebildet.

Vorteilhaft kann die sicherheitsgerichtete Verarbeitung der Statusdaten und/oder der Eingangs- und/oder Ausgangsdaten durch das Gateway-Modul auch das Ausführen wenigstens einer Sicherheitsfunktion umfassen. Vorzugsweise werden dabei durch die Sicherheitsfunktion in Abhängigkeit sicherheitsgerichteter Eingangsdaten und in Abhängigkeit der übermittelten Statusdaten sicherheitsgerichtete Ausgangsdaten erzeugt. Eine Sicherheitsfunktion kann auch eine Sicherheitsverknüpfung sein, welche beispielsweise der sicherheitsgerichteten Verknüpfung redundant bereitgestellter Signale oder Daten dient.

Die E/A-Module können vorteilhaft als Eingangs- und/oder Ausgangs-Module ausgebildet sein, d.h. Eingänge und/oder Ausgänge zum Anschließen von Prozesseinrichtungen wie Sensoren und/oder Aktoren aufweisen.

Das Gateway-Modul verarbeitet vorzugsweise die Eingangsdaten und die Statusdaten der Eingangsmodule in der Art und Weise, dass die Eingangsdaten den Anforderungen der Sicherheitsnormen entsprechen. Die sicheren Eingangsdaten können dann zu einer überlagerten sicheren Steuerung und/oder einer überlagerten Standard-Steuerung übertragen werden. Zusätzlich oder alternativ können diese Daten innerhalb des Gateway-Moduls sicher verarbeitet werden und das Ergebnis an die Ausgänge übertragen werden.

Auf der Ausgangsseite übernimmt das Gateway-Modul vorzugsweise das Übertragen der Ausgangsdaten und die Diagnose der Ausgangskreise, so dass der Zustand der Ausgangsmodule überwacht wird, um im Fehlerfall entsprechend reagieren zu können.

Die Ansteuerung der Ausgänge kann beispielsweise derart erfolgen, dass zwei Ausgangsmodule angesteuert werden, die zusammen einen zweikanaligen sicheren Ausgang bilden. Es können aber beispielsweise auch Standard-Ausgänge eingesetzt werden, die überwacht werden, wobei nur ein vorgeschaltetes sicheres Ausgangsmodul vorgesehen ist, dass im Fehlerfall die Versorgung der Standard Ausgangsmodule abschaltet.

Ein Kerngedanke der vorliegenden Erfindung ist darin zu sehen, die Sicherheitslogik in das Gateway-Modul zu verlagern, anstatt diese in den einzelnen E/A-Modulen vorzusehen, wobei in vorteilhafter Weise die Erfassung von sicherheitsrelevanten Signalen mit E/A-Modulen erfolgt, welche üblicherweise nur für nicht sicherheitsrelevante Signale ausgebildet sind, insbesondere mit einkanaligen E/A-Modulen. Da die generellen Signale bei sicherheitsrelevanten E/A-Modulen und nicht sicherheitsrelevanten E/A-Modulen seitens der Physik gleich sind, ist erfindungsgemäß insbesondere vorgesehen, sicherheitsgerichtete und nicht sicherheitsgerichtete Signale mit identischen E/A-Modulen zu erfassen, was zur Erhöhung der Flexibilität führt, da weniger unterschiedliche E/A-Module verwendet werden müssen, wodurch auch der Entwicklungsaufwand massiv reduziert werden kann. Es werden somit vorzugsweise auch sicherheitsgerichtete Eingangsdaten von einem einkanaligen Eingangs-Modul erfasst und/oder sicherheitsgerichtete Ausgangsdaten von einem einkanaligen Ausgangs-Modul ausgegeben.

Ein Überprüfen und Gegenprüfen von Daten, welches gemäß dem Stand der Technik in zweikanaligen E/A-Modulen für sicherheitsrelevante Signale erfolgt, erfolgt erfindungsgemäß an einer zentralen Stelle im Gateway-Modul. Zu diesem Zweck umfasst das Gateway-Modul vorzugsweise eine, insbesondere redundant ausgelegte, Sicherheitslogik, welche zur sicherheitsgerichteten Verarbeitung von Statusdaten und/oder von Eingangs- und/oder Ausgangsdaten und/oder zum Ausführen einer Sicherheitsfunktion ausgebildet ist.

In einer besonders vorteilhaften Ausführungsform des Steuer- und Datenübertragungssystem ist das erste Kommunikationsnetzwerk ein lokaler Bus und die E/A-Module sind als modulare Ein- und Ausgangsgeräte ausgebildet. Der lokale Bus unterstützt vorzugsweise wenigstens ein ausgewähltes Bus-Protokoll, beispielsweise ein Feldbus-Protokoll wie INTERBUS oder Profibus. Prinzipiell kann jedoch jedes geeignete Bus-Protokoll eingesetzt werden. Da die Verbindung innerhalb des lokalen Busses vorteilhaft kabellos über Kontakte durch Aufrasten auf eine Tragschiene erfolgt, ist die lokale Ausdehnung innerhalb der Station, welche das Gateway-Modul und die E/A-Module umfasst, begrenzt. Die Erfinder haben erkannt, dass bei dieser Ausführungsform ein vollständig ausgeprägtes Sicherheitsprotokoll wie es aus dem Stand der Technik für die Übertragung sicherheitsgerichteter Daten bekannt ist, nicht erforderlich ist, sondern eine ausreichende Sicherheit durch wenige technische Maßnahmen gegen Datenfälschung und Unregelmäßigkeiten bei der Datenübertragung gewährleistet werden kann. Die Sicherheitskommunikation ist nur noch ab dem Gateway-Modul, auch als Busklemme bezeichnet, in das zweite, überlagerte Kommunikationsnetzwerk erforderlich. Das zweite Kommunikationsnetzwerk kann beispielsweise als Feldbus ausgebildet sein.

Die Prozesssteuerung erfolgt typischerweise durch eine mit dem zweiten Kommunikationsnetzwerk verbundene, beispielsweise als speicherprogrammierbare Steuerung (SPS) ausgebildete Steuereinrichtung. Da die sicherheitsgerichtete Logikverarbeitung vom Gateway-Modul ausgeführt wird und somit das Gateway-Modul zum Verarbeiten sowohl sicherheitsgerichteter als auch nicht sicherheitsgerichteter Daten ausgebildet ist, ist es auch denkbar, dass das Gateway-Modul die Prozesssteuerung für die lokale Station übernimmt, d.h. die vollständige Steuerung der Ein- und Ausgänge der an das erste Kommunikationsnetzwerk angeschlossenen E/A-Module.

Wie die Erfinder erkannt haben, sind in den E/A-Modulen anstatt der gemäß dem Stand der Technik verwendeten Sicherheitslogik nur wenige Diagnoseerweiterungen erforderlich, um die sicherheitsrelevanten physikalischen Signale fehlerfrei zu erfassen und an das Gateway-Modul zu übertragen. Diese dienen insbesondere der Diagnose der Übertragungsstrecke vom E/A-Modul bis zum Gateway-Modul und die Diagnose der Peripherie und der Ein- und Ausgänge.

Dementsprechend sind das Gateway-Modul und die E/A-Module zur fehlergesicherten Kommunikation ausgebildet. Besonders vorteilhaft sind die Module dazu ausgebildet, zur fehlergesicherten Kommunikation Datentelegramme auszutauschen, welche eine Prüfsumme und/oder wenigstens einen Zählerwert umfassen, wobei der Zählerwert nach jedem erfolgreich übertragenen Datentelegramm inkrementiert wird. Die Prüfsumme kann beispielsweise als CRC (Cyclic Redundancy Check) ausgebildet sein. Durch die Dynamik, d.h. die Änderung des Zählerwertes, können Fehler bei der Datenübertragung, insbesondere verlorene oder doppelt gesendete Datentelegramme, erkannt werden.

In einer besonders vorteilhaften Ausführungsform ist ferner vorgesehen, dass für jedes der an das erste Kommunikationsnetzwerk angeschlossenen E/A-Module das jeweilige Datentelegramm einen unterschiedlichen, individuellen Zählerwert umfasst. Die Verwendung individueller Zähler, die für jedes der E/A-Module in einem Datentelegramm jeweils unterschiedliche Werte haben, ermöglicht besonders vorteilhaft eine Diagnose der Adressierung der einzelnen E/A-Module innerhalb der Station. Vorteilhaft kann vorgesehen sein, dass ein gemeinsames Datentelegramm alle an das erste Kommunikationsnetzwerk angeschlossenen E/A-Module durchläuft und die jeweiligen individuellen Zählerwerte für die E/A-Module umfasst.

In den einzelnen E/A-Modulen werden im Gegensatz zum Stand der Technik nur noch einfache Diagnoseinstanzen verwendet, die die Sicherheitslogik im Gateway-Modul bei der Fehlererkennung unterstützen. Zu diesem Zweck weist zumindest ein E/A-Modul, typischerweise alle E/A-Module, eine Diagnoseeinheit auf, welche zur Diagnose der Ein- und/oder Ausgänge des jeweiligen E/A-Moduls und/oder zur Diagnose einer an einen Ein- oder Ausgang des jeweiligen E/A-Moduls angeschlossenen Prozesseinrichtung, sowie zum Erzeugen entsprechender Statusdaten ausgebildet ist. Ein diagnostizierbarer Fehler eines Ein- oder Ausgangs kann beispielsweise ein aufgetretener Masseschluss sein.

Zur Diagnose der Peripherie, d.h. einer angeschlossenen Prozesseinrichtung wie beispielsweise eines Sensors oder Aktors ist vorteilhaft vorgesehen, dass die Diagnoseeinheit im jeweiligen E/A-Modul Daten mit einer zugeordneten Diagnoseeinheit austauscht, welche in einer an einen Eingang oder Ausgang des E/A-Moduls angeschlossenen Prozesseinrichtung angeordnet ist. Auf diese Weise können Fehler im Peripherie-Gerät erkannt und durch die Diagnoseeinheit im E/A-Modul abgefragt werden.

Besonders vorteilhaft ist die Diagnoseeinheit wenigstens eines E/A-Moduls und/oder die Diagnoseeinheit einer an das E/A-Modul angeschlossenen Prozesseinrichtung mittels vom Gateway-Modul übertragener Steuerdaten steuerbar. Es können dazu verschiedene Diagnoseinstanzen innerhalb der Diagnoseeinheiten in den E/A-Modulen und/oder in den angeschlossenen Peripherie-Geräten vorgesehen werden, die von der im Gateway-Modul angeordneten Sicherheitslogik angesprochen werden und durch die Erwartungshaltung in der Sicherheitslogik auf Fehlerverhalten überprüft werden. Es erfolgt somit eine Fernsteuerung der Diagnoseeinheiten im E/A-Modul und/oder in der Prozesseinrichtung durch das Gateway-Modul. Eine separate Absicherung und Diagnoseauswertung in den E/A-Modulen ist dadurch nicht erforderlich. Die Bearbeitung der E/A-Daten und der Diagnosedaten erfolgt ausschließlich im Gateway-Modul.

Das oben genannte technische Problem wird auch durch die Merkmale des Anspruchs 1 gelöst.

Danach ist ein Gateway-Modul zum Einsatz in dem beschriebenen Steuer- und Datenübertragungssystem vorgesehen, welches Schnittstellen zum Anschließen an ein erstes und an ein zweites Kommunikationsnetzwerk umfasst, wobei das Gateway-Modul über das erste Kommunikationsnetzwerk mit einer Mehrzahl von E/A-Modulen verbindbar ist, und wobei das Gateway-Modul dazu ausgebildet ist, mit den E/A-Modulen über das erste Kommunikationsnetzwerk fehlergesichert zu kommunizieren, um Eingangs- und/oder Ausgangsdaten zu übertragen und um Statusdaten von wenigstens einem E/A-Modul zu empfangen. Ferner umfasst das Gateway-Modul eine insbesondere als Sicherheitslogik ausgebildete Sicherheitssteuerungseinheit, welche zum Ausführen einer Sicherheitsverarbeitung ausgebildet ist, d.h. zur sicherheitsgerichteten Verarbeitung der Statusdaten und/oder der Eingangs- und/oder Ausgangsdaten.

In Abhängigkeit der sicherheitsgerichteten Verarbeitung im Gateway-Modul können vorteilhaft in einer überlagerten Sicherheitssteuerung Sicherheitsfunktionen ausgeführt werden. In einer vorteilhaften Ausführungsform kann aber auch vorgesehen sein, dass das Gateway-Modul zum Ausführen wenigstens einer Sicherheitsfunktion ausgebildet ist, welche vorzugsweise in Abhängigkeit sicherheitsgerichteter Eingangsdaten und in Abhängigkeit empfangener Statusdaten sicherheitsgerichtete Ausgangsdaten erzeugt. In dieser Ausführungsform kann auf das Ausführen von Sicherheitsfunktionen in einer überlagerten Sicherheitssteuerung vorteilhaft verzichtet werden, es können aber auch zusätzliche Sicherheitsfunktionen in einer überlagerten Sicherheitssteuerung ausgeführt werden.

Ferner liegen auch alle oben im Zusammenhang mit dem Steuer- und Datenübertragungssystem beschriebenen Ausführungsformen eines solchen Gateway-Moduls ebenfalls im Rahmen der Erfindung.

Das oben genannte technische Problem wird ferner durch die Merkmale des Anspruchs 2 gelöst.

Danach ist ein E/A-Modul zum Einsatz im beschriebenen Steuer- und Datenübertragungssystem vorgesehen, welches - wenigstens einen Ein- und/oder Ausgang zum Anschließen einer insbesondere als Sensor oder Aktor ausgebildeten Prozesseinrichtung, eine Diagnoseeinheit zum Erzeugen von Statusdaten betreffend den Funktionszustand des Ein- und/oder Ausgangs und/oder einer an den Ein- und/oder Ausgang angeschlossenen Prozesseinrichtung, und eine Schnittstelle zum Anschließen an ein Kommunikationsnetzwerk umfasst, wobei das E/A-Modul dazu ausgebildet ist, über das Kommunikationsnetzwerk fehlergesichert mit einem Gateway-Modul zu kommunizieren.

Es liegen auch alle oben im Zusammenhang mit dem Steuer- und Datenübertragungssystem beschriebenen Ausführungsformen eines solchen E/A-Moduls ebenfalls im Rahmen der Erfindung.

Das oben genannte technische Problem wird ferner durch die Merkmale des Anspruchs 13 gelöst.

Danach ist ein Verfahren zur sicheren Prozesssteuerung in einem Steuer- und Datenübertragungssystem mit einer Mehrzahl von E/A- Modulen vorgesehen, wobei die E/A-Module über ein erstes Kommunikationsnetzwerk mit einem Gateway-Modul verbunden sind, und wobei das Gateway-Modul mit einem zweiten, dem ersten Kommunikationsnetzwerk hierarchisch übergeordneten Kommunikationsnetzwerk verbunden ist und als Gateway zwischen dem ersten und zweiten Kommunikationsnetzwerk wirkt. Das Verfahren umfasst das Erzeugen von Statusdaten durch eine in wenigstens einer der E/A-Module angeordneten Diagnoseeinheit, wobei die Statusdaten Informationen betreffend den Funktionszustand eines Ein- und/oder Ausgangs des E/A -Moduls und/oder einer an einen Ein- oder Ausgang des E/A- Moduls angeschlossenen Prozesseinrichtung umfassen, das Ausführen einer fehlergesicherten Kommunikation zwischen dem Gateway-Modul und den E/A-Modulen über das erste Kommunikationsnetzwerk, um Statusdaten und Eingangs- und/oder Ausgangsdaten zu übertragen, und eine sicherheitsgerichtete Verarbeitung der Statusdaten und/oder der Eingangs- und/oder Ausgangsdaten durch das Gateway-Modul.

Die sicherheitsgerichtete Verarbeitung kann vorteilhaft das Ausführen wenigstens einer Sicherheitsfunktion durch das Gateway-Modul umfassen, wobei die Sicherheitsfunktion in Abhängigkeit sicherheitsgerichteter Eingangsdaten und in Abhängigkeit von Statusdaten sicherheitsgerichtete Ausgangsdaten erzeugt.

Vorzugsweise umfasst das Verfahren alle erforderlichen Verfahrensschritte zum Betreiben der oben beschriebenen Ausführungsformen eines Steuer- und Datenübertragungssystems oder deren Kombination.

Ferner kann das Verfahren vorteilhaft vorsehen, eine in einer der E/A-Module angeordnete Diagnoseeinheit durch das Gateway-Modul fernzusteuern, wobei zu diesem Zweck Steuerdaten vom Gateway-Modul zu der Diagnoseeinheit übertragen werden.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung eines aus dem Stand der Technik bekannten Steuer- und Datenübertragungssystems,
- Fig. 2: eine schematische Darstellung einer bevorzugten Ausführungsform eines erfindungsgemäßen Steuer- und Datenübertragungssystems,
- Fig. 3: eine schematische Darstellung der mit einem E/A-Modul des in Fig. 2 dargestellten Steuer- und Datenübertragungssystems ausgetauschten Daten, und
- Fig. 4: eine schematische Darstellung eines zeitlichen Verlaufs von E/A-Modulindividuellen Zählerwerten, die innerhalb von Datentelegrammen übertragen werden.

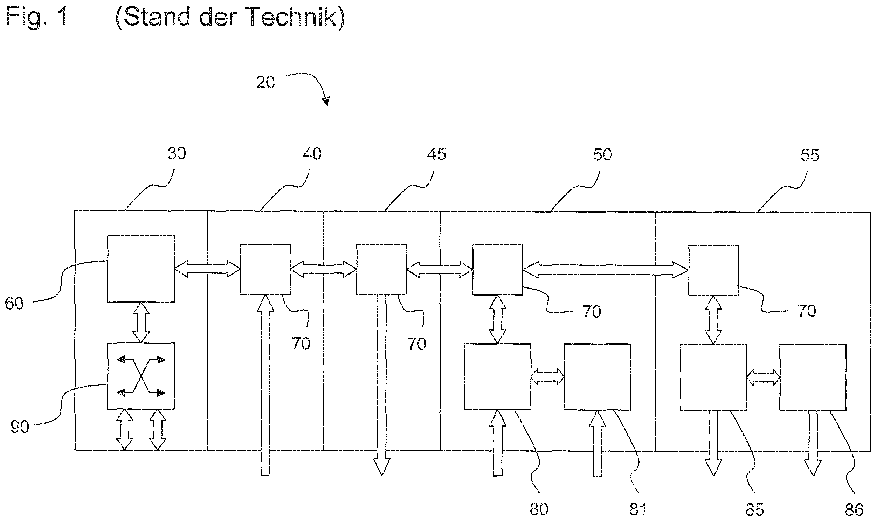

Fig. 1 zeigt schematisch ein aus dem Stand der Technik bekanntes Steuer- und Datenübertragungssystem 20, welches eine Mehrzahl von E/A-Modulen 40, 45, 50 und 55 umfasst, welche jeweils über eine Busschnittstelle 70 an einen in einem Gateway-Modul 30 angeordneten Bus-Master 60 angeschlossen sind. Das Gateway-Modul 30 umfasst ferner einen Netzwerk-Koppler 90 zum Anschließen an ein überlagertes Netzwerk. An dieses überlagerte Netzwerk ist typischerweise eine in Fig. 1 nicht dargestellte Steuerungseinrichtung angeschlossen, welche die unabhängig voneinander arbeitenden E/A-Module 40, 45, 50 und 55 individuell anspricht. Die E/A-Module 40 und 50 sind als Eingangs-Module und die E/A-Module 45 und 55 sind als Ausgangs-Module ausgebildet, wobei die E/A-Module 50 und 55 als spezielle sichere E/A-Module ausgebildet sind, bei denen die Signale doppelt erfasst und innerhalb des Gerätes aus Plausibilität und Fehler überprüft werden, wobei zu diesem Zweck jeweils zwei mit Mikroprozessoren aufgebaute Kerne 80 und 81 bzw. 85 und 86 vorgesehen sind.

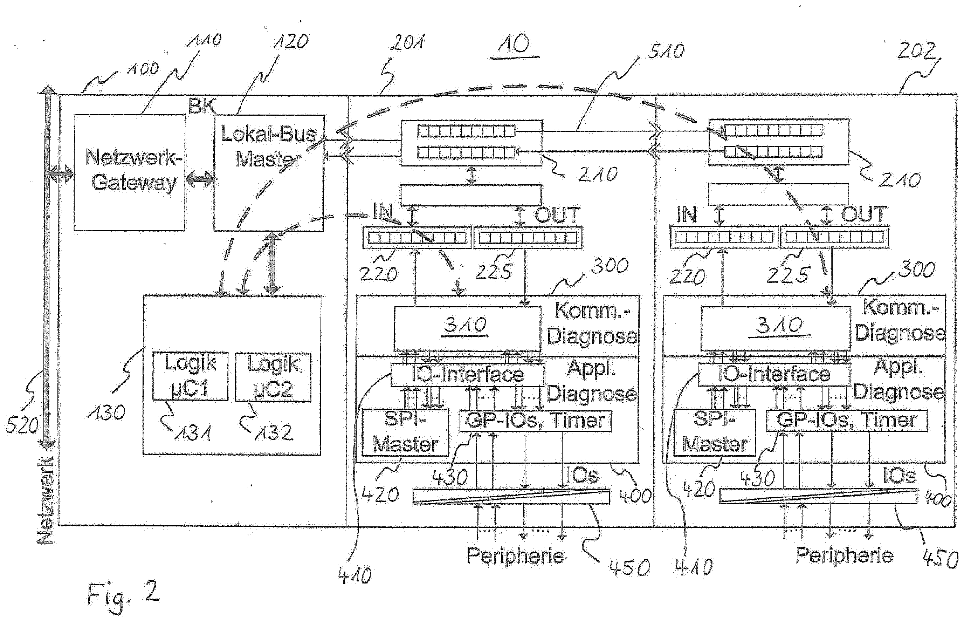

In Fig. 2 ist schematisch eine bevorzugte Ausführungsform eines erfindungsgemäßen Steuer- und Datenübertragungssystems 10 dargestellt, welches auf aus dem Stand der Technik bekannte zweikanalige E/A-Module für das Erfassen sicherheitsrelevanter Signale verzichtet.

Das Steuer- und Datenübertragungssystems 10 umfasst das Gateway-Modul 100, sowie die E/A-Module 201 und 202, welche über einen Lokalbus 510 miteinander kommunizieren können. Der Lokalbus 510 ist im dargstellten Ausführungsbeispiel als Ringbus ausgebildet, wobei der Lokal-Bus-Master 120 im Gateway-Modul zur Kommunikation mit den E/A-Modulen 201 und 202 ein Datentelegramm erzeugt, welches in der Art eines Schieberegisters alle an den Lokal-Bus 510 angeschlossenen E/A-Module durchläuft. Nur der einfacheren Darstellung halber sind nur zwei E/A-Module 201 und 202 dargestellt. Es kann auch eine deutlich größere Anzahl von E/A-Modulen vorgesehen sein. Die dargestellte Ausführung des Lokalbusses 510 als Ringbus ist nur beispielhaft, es kann auch jede andere geeignete Bus-Topologie eingesetzt werden. Ferner wird zur Kommunikation über den Lokalbus 510 vorzugsweise ein ausgewähltes Bus-Protokoll, vorzugsweise ein Feldbus-Protokoll, eingesetzt. Es kann aber prinzipiell jedes geeignete Kommunikationsprotokoll eingesetzt werden.

Erfindungsgemäß wird die Sicherheitslogik von den E/A-Modulen in das Gateway-Modul 100 verlagert. Dies ist in Fig. 2 durch die gestrichelten Pfeile symbolisiert. Das Gateway-Modul 100 umfasst dementsprechend eine Sicherheits-Steuereinrichtung 130, welche mit dem Lokal-Bus-Master 120 verbunden ist. Vorteilhaft umfasst die Sicherheits-Steuereinrichtung 130 zwei redundante, mit Mikroprozessoren aufgebaute Kerne 131 und 132, deren Ergebnisse miteinander verglichen werden. Die Sicherheits-Steuereinrichtung 130 ist insbesondere dazu ausgebildet, eine Sicherheitsfunktion auszuführen, welche in Abhängigkeit sicherheitsgerichteter Eingangsdaten sicherheitsgerichtete Ausgangsdaten erzeugt.

Die Ausführung der Sicherheitsfunktion durch das Gateway-Modul 100 erfolgt zusätzlich in Abhängigkeit von Statusdaten, die von Diagnoseeinheiten 400 in den E/A-Modulen erzeugt und zum Gateway-Modul 100 übertragen werden.

Die Kommunikation zwischen dem Gateway-Modul 100 und den E/A-Modulen 201 und 202 erfolgt fehlergesichert, wobei die E/A-Module zu diesem Zweck eine Kommunikations-Diagnoseeinheit 300 umfassen, welche jeweils über Register 220 und 225 für Eingangs- bzw. Ausgangsdaten mit einer Busschnittstelle 210 verbunden ist, wobei die Kommunikations-Diagnoseeinheit 300 eine zum Ausführen der fehlergesicherten Kommunikation ausgebildete Einheit 310 umfasst. Es kann vorteilhaft vorgesehen sein, die Einheit 310 als Chip auszubilden. Ferner können vorteilhaft die Kommunikations-Diagnoseeinheit 300 und die Einheit 310 zum Ausführen der fehlergesicherten Kommunikation, gegebenenfalls zusätzlich mit den Registern 220 und 225 und/oder der Busschnittstelle 210, in einem gemeinsamen Chip angeordnet sein. Die Kommunikations-Diagnoseeinheit 300 ist mit der Diagnoseeinheit 400 verbunden, welche zur Diagnose eines Ein- und/oder Ausgangs und/oder einer an einen Ein- oder Ausgang angeschlossenen Prozesseinrichtung sowie zum Erzeugen entsprechender Statusdaten ausgebildet ist. Auch die Diagnoseeinheit 400 kann vorteilhaft als Chip aufgebaut sein oder auch zusammen mit der Kommunikations-Diagnoseeinheit 300 auf einem gemeinsamen Chip angeordnet sein. Im dargestellten Ausführungsbeispiel umfasst die Diagnoseeinheit 400 einen SPI (Serial Peripheral Interface)-Master 420, welcher über eine E/A-Schnittstelle 410 mit einer die Ein- und Ausgänge sowie gegebenenfalls vorgesehene Timer umfassenden E/A-Einheit 430 verbunden ist. Die E/A-Schnittstelle 410 ist mit der Einheit 310 der Kommunikations-Diagnoseeinheit 300 verbunden. Die beispielsweise als Allzweckein- und/oder ausgänge (engl. GPIO - General Purpose Input/Output) ausgebildeten Ein- und/oder Ausgänge sind über die Schnittstelle 450 mit einer oder mehreren Prozesseinrichtungen, d.h. mit Peripherie-Geräten wie zum Beispiel Sensoren oder Aktoren verbunden. Durch die Schnittstelle 450 können beispielsweise Signalanpassungen oder eine A/D-Wandlung vorgenommen werden.

Das Gateway-Modul 100 umfasst ferner ein Netzwerk-Gateway 110 zum Anschließen an ein überlagertes Netzwerk 520. Im Gateway-Modul 100 erfolgt die Übersetzung der internen Signale auf das verwendete Netzwerk 520 und zusätzlich die Anpassung des Sicherheitsprotokolls an das überlagerte Netzwerk 520, so dass auch das Gateway-Modul unter der Verwendung derselben physikalischen Schnittstelle sich nur noch durch die Netzwerkprotokolle unterscheidet bzw. mehrere Protokolle unterstützen kann, so dass das gleiche Gateway-Modul 100 für verschiedene Netzwerke und sichere Protokolle eingesetzt werden kann.

Um die physikalischen Signale fehlerfrei zu erfassen und an das Gateway-Modul zu übertragen, ist somit erfindungsgemäß nur eine Diagnose der Übertragungsstrecke vom E/A-Modul bis zum Gateway-Modul und eine Diagnose der Peripherie und der Ein-/Ausgänge erforderlich.

Im dargestellten Ausführungsbeispiel sind Gateway-Modul 100 und E/A-Module 201 und 202 als Klemmen ausgebildet, wodurch die lokale Ausdehnung begrenzt ist, so dass ein vollständig ausgeprägtes Sicherheitsprotokoll nicht erforderlich ist, sondern nur noch wenige technische Maßnahmen gegen Datenfälschung und Unregelmäßigkeiten bei der Datenübertragung. Die Sicherheitskommunikation ist nur noch ab dem Gateway-Modul 100 in das überlagerte Netzwerk 520 erforderlich.

Somit sind alle E/A-Module 201 und 202 unabhängig davon, welche Sicherheitsprotokolle im überlagerten Netzwerk 520 verwendet werden und können immer gleich aufgebaut sein. Die Sicherheitslogik innerhalb des Gateway-Moduls 100 übernimmt die Absicherung der Datenkommunikation zu den einzelnen E/A-Modulen und bedient die einzelnen Diagnoseinstanzen innerhalb der E/A-Module.

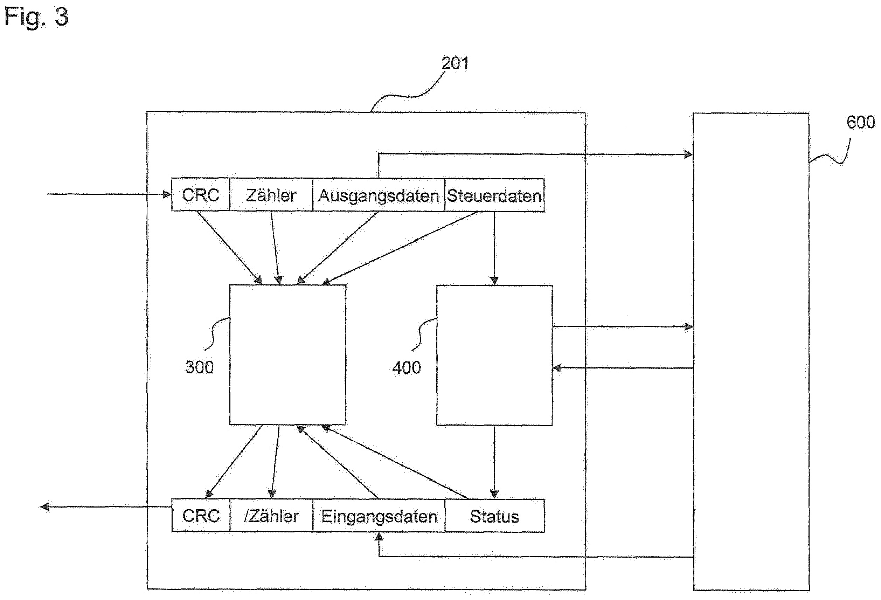

In Fig. 3 ist schematisch und vereinfacht dargestellt, welche Daten das exemplarisch ausgewählte E/A-Modul 201 vom Gateway-Modul 100 empfängt, wie diese weitergeleitet werden und welche Daten an das Gateway-Modul 100 zurück übertragen werden.

Die Absicherung der Kommunikation zwischen der Sicherheitslogik des Gateway-Moduls 100 und den E/A-Modulen erfolgt mit einer CRC. Zusätzlich wird jedes E/A-Modul vorzugsweise mit einem beispielsweise 8 Bit langen Zähler angesprochen, der für jedes lokale E/A-Modul unterschiedlich ist und nach jeder erfolgreichen Kommunikationsverbindung inkrementiert wird. Das E/A-Modul antwortet mit gespiegeltem Zählerwert. Dieser Zähler stellt ein Diagnoseverfahren zur Adressierung der einzelnen E/A-Module dar. Durch die durch Änderung des Zählerwertes erzeugte Dynamik können weitere Fehler bei der Datenübertragung erkannt werden.

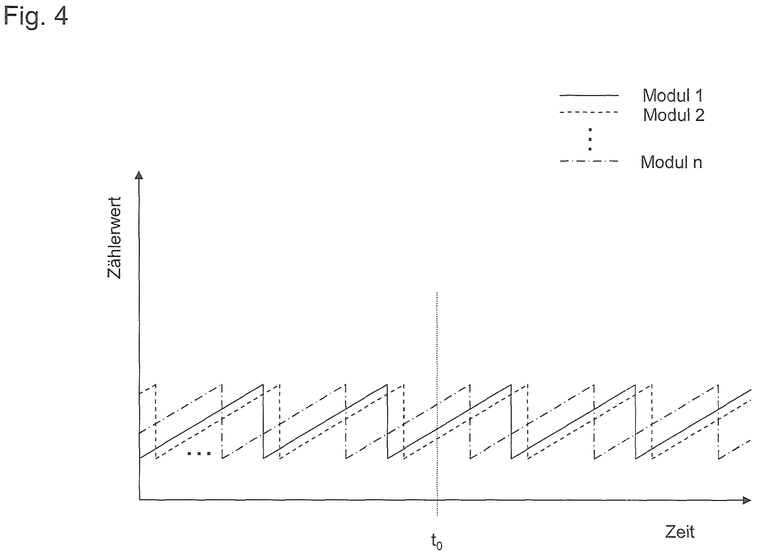

Wie in Fig. 4 dargestellt, wird jedes E/A-Modul mit einem unterschiedlichen Zähler angesprochen. Alle Zähler werden nach jeder erfolgreichen Kommunikationsverbindung inkrementiert bis zu einem Maximalwert. Nach Erreichen des Maximalwertes wird jeder Zähler wieder auf einen Anfangswert gesetzt. Auf diese Weise unterscheiden sich bei jeder Datenübertragung, beispielsweise zum Zeitpunkt t₀, die Zählerwerte für einzelne E/A-Module. Die in Fig. 4 dargestellten kontinuierlichen Verläufe geben nur symbolisch den Verlauf der diskreten Zählerwerte wieder.

Wieder bezugnehmend auf Fig. 3, werden alle empfangenen Daten, umfassend den Zähler, Ausgangsdaten, Steuerdaten sowie den CRC der Kommunikations-Diagnoseeinheit 300 zugeleitet, welche den CRC und den Zähler prüft. Die Ausgangsdaten werden direkt an die Peripherie 600 ausgegeben. Die Steuerdaten werden der Diagnoseeinheit 400 zugeleitet und dienen der Fernsteuerung der Diagnoseeinheit 400, d.h. zum Beispiel der Festlegung, welche Statusdaten von der Diagnoseeinheit 400 bereitgestellt werden sollen.

Die an das Gateway-Modul 100 zu sendenden Daten umfassen, den gespiegelten Zähler, Eingangsdaten, Statusdaten und CRC. Die von der Peripherie bereitgestellten Eingangsdaten, sowie die von der Diagnoseeinheit 400 erzeugten Statusdaten werden der Kommunikations-Diagnoseeinheit 300 zur Erstellung des CRC zugeleitet. Zum Erzeugen der Statusdaten durch die Diagnoseeinheit 400 erfolgt insbesondere eine Kommunikation zwischen Diagnoseeinheit 400 und Peripherie 600.

Die Abwicklung der Kommunikation (Zustandsmaschine) findet ausschließlich in der Sicherheitslogik des Gateway-Moduls 100 statt. In den einzelnen E/A-Modulen werden nur noch einfache Diagnoseinstanzen verwendet, die die Sicherheitslogik im Gateway-Modul 100 bei der Fehlererkennung unterstützen.

Es können verschiedene Diagnoseinstanzen innerhalb der Diagnoseeinheit 400 sowie in der Peripherie 600 vorgesehen werden, die von der Sicherheitslogik des Gateway-Moduls 100 angesprochen werden und durch die Erwartungshaltung in der Sicherheitslogik auf das Fehlerverhalten überprüft werden. Eine separate Absicherung und Diagnoseauswertung in den E/A-Modulen ist somit nicht mehr erforderlich. Die Bearbeitung der E/A-Daten und der Diagnosedaten erfolgt ausschließlich Gateway-Modul 100.

Da das Gateway-Modul 100 die Logikverarbeitung ausführt und sowohl die Standard- als auch die Sicherheits-Daten verarbeiten kann, ist auch denkbar, dass das Gateway-Modul 100 für die lokale Station, d.h. die lokalen E/A-Module, die vollständige Steuerung der Ein- und Ausgänge übernimmt. Somit ist es möglich, dass das Gateway-Modul 100 im Stand-Alone-Betrieb als lokale Steuerung eingesetzt wird und zusätzlich für das überlagerte Netzwerk 520 die erforderlichen Daten zur Verfügung stellt bzw. sich als eine lokale intelligente Station steuern lässt. Die Verarbeitung im Gateway-Modul hat den Vorteil, dass diese viel schneller ablaufen kann als in einer überlagerten Steuerung, da die lokale Station einen effizienteren und schnelleren Zugang zu den lokalen E/A-Daten hat. Somit können kürzere Reaktionszeiten erreicht werden. Außerdem wird die überlagerte Steuerung entlastet.

Die erfindungsgemäße Lösung bietet eine Reihe von Vorteilen gegenüber dem aktuellen Stand der Technik. Es wird eine flexiblere Nutzung bestehender E/A-Module für nicht sicherheitsrelevante Signale, eine Reduzierung der Anzahl unterschiedlicher E/A-Module innerhalb des Systems erreicht. Zudem können alle E/A-Module unabhängig vom überlagerten Netzwerk ausgebildet sein. Eine Vereinfachung der E/A-Module ergibt sich zudem, da solche für die Erfassung der sicherheitsrelevanten Signalen entfallen. Dementsprechend werden wenige oder keine Mikroprozessoren innerhalb der Station, umfassend das Gateway-Modul und die E/A-Module, benötigt und insgesamt die Komplexität innerhalb der Station reduziert. Auch der Aufwand in Entwicklung, Produktion, Test und Support wird somit reduziert. Je nach lokalem Kommunikationssystem kann ferner eine gesonderte Adressierung der Module für sicherheitsrelevante Signale entfallen. Ferner wird nur eine Logikverarbeitung im System benötigt. Das Gateway-Modul kann zudem auch als separate Station ohne Anbindung an das überlagerte Netzwerk die Sicherheitsaufgaben vollständig erfüllen, d.h. nicht nur die Erfassung der Ein- und Ausgänge, sondern auch die Steuerung innerhalb der lokalen Station kann realisiert werden. Dabei können sowohl die Sicherheitssignale als auch die Standard Signale benutzt werden. Die Verarbeitung der lokalen E/A-Daten ist im Gateway-Modul wesentlich schneller als in einer überlagerten Steuerung. Weiterhin ist denkbar, dass die zentrale Sicherheitsverarbeitung nicht ausschließlich im Gateway-Modul, sondern auch an einer anderen Stelle wie z.B. in einer überlagerten Sicherheitssteuerung oder an beliebiger Stelle innerhalb der lokalen Station läuft und das Gateway-Modul nur noch als Gateway funktioniert. In diesem Fall muss das Gateway-Modul den Datentransfer zu den Geräten und verschiedene Dienste zur Verfügung stellen, die notwendig sind, um die Diagnoseeinheiten und die E/A-Daten der einzelnen lokalen Geräte zu steuern.

## Patentansprüche

1. Gateway-Modul, umfassend
- Schnittstellen zum Anschließen an ein erstes und an ein zweites Kommunikationsnetzwerk, wobei das Gateway-Modul über das erste Kommunikationsnetzwerk mit einer Mehrzahl von E/A-Modulen (201, 202) verbindbar ist, wobei jedes der E/A-Module als Eingangs- und/oder Ausgangs-Modul ausgebildet ist und einen Eingang und/oder Ausgang zum Anschließen von Sensoren und/oder Aktoren aufweist, und wobei das Gateway-Modul (100) dazu ausgebildet ist, mit den E/A-Modulen (201, 202) über das erste Kommunikationsnetzwerk (510) fehlergesichert zu kommunizieren, um Eingangs- und/oder Ausgangsdaten zu übertragen und um Statusdaten von wenigstens einem E/A-Modul (201, 202) zu empfangen, wobei die Statusdaten den Funktionszustand eines Ein- und/oder Ausgangs zum Anschließen von Sensoren und/oder Aktoren des E/A-Moduls und/oder einen an einen Ein- oder Ausgang des E/A-Moduls angeschlossenen Sensor oder Aktor betreffen, und
- eine insbesondere als Sicherheitslogik ausgebildete Sicherheitssteuerungseinheit (130), welche zum Ausführen einer Sicherheitsverarbeitung der Statusdaten und Eingangs- und/oder Ausgangsdaten ausgebildet ist.

2. E/A-Modul (201, 202), umfassend
- wenigstens einen Ein- und/oder Ausgang zum Anschließen einer als Sensor oder Aktor ausgebildeten Prozesseinrichtung,
- eine Diagnoseeinheit zum Erzeugen von Statusdaten betreffend den Funktionszustand des wenigstens einen Ein- und/oder Ausgangs zum Anschließen von Prozesseinrichtungen und/oder einer an den wenigstens einen Ein- und/oder Ausgang angeschlossenen Prozesseinrichtung,
- eine Schnittstelle (210) zum Anschließen an ein Kommunikationsnetzwerk (510), wobei das E/A-Modul (201, 202) dazu ausgebildet ist, über das Kommunikationsnetzwerk (510) fehlergesichert mit einem Gateway-Modul (100) zu kommunizieren.

3. Steuer- und Datenübertragungssystem (10) zum Steuern von sicherheitskritischen Prozessen, umfassend
- eine Mehrzahl von E/A-Modulen (201, 202), wobei jedes der E/A-Module als Eingangs- und/oder Ausgangs-Modul ausgebildet ist und einen Eingang und/oder Ausgang zum Anschließen von Prozesseinrichtungen wie Sensoren und/oder Aktoren aufweist, und wobei die Mehrzahl von E/A-Modulen (201, 202) wenigstens ein E/A-Modul gemäß Anspruch 2 umfasst,
- ein Gateway-Modul (100) gemäß Anspruch 1,
- ein erstes Kommunikationsnetzwerk (510), und
- ein zweites, dem ersten Kommunikationsnetzwerk (510) hierarchisch übergeordnetes Kommunikationsnetzwerk (520), wobei die Mehrzahl von E/A-Modulen über das erste Kommunikationsnetzwerk (510) mit dem Gateway-Modul (100) verbunden sind, und wobei
- das Gateway-Modul (100) mit dem zweiten, dem ersten Kommunikationsnetzwerk (510) hierarchisch übergeordneten Kommunikationsnetzwerk (520) verbunden ist und als Gateway zwischen dem ersten und zweiten Kommunikationsnetzwerk wirkt, und
- das Gateway-Modul (100) mit den E/A-Modulen (201, 202) über das erste Kommunikationsnetzwerk (510) fehlergesichert kommuniziert, um Statusdaten und Eingangs- und/oder Ausgangsdaten zu übertragen.

4. Steuer- und Datenübertragungssystem nach Anspruch 3, wobei mindestens eines der E/A-Module ein einkanaliges Eingangs-Modul ist, welches dazu ausgebildet ist, sicherheitsgerichtete Eingangsdaten zu erfassen und/oder wobei mindestens eines der E/A-Module ein einkanaliges Ausgangs-Modul ist, welches dazu ausgebildet ist, sicherheitsgerichtete Ausgangsdaten auszugeben.

5. Steuer- und Datenübertragungssystem nach einem der Ansprüche 3 oder 4, wobei das Gateway-Modul (100) zum Ausführen der Sicherheitsverarbeitung der Statusdaten und/oder der Eingangs- und/oder Ausgangsdaten eine redundant ausgelegte Sicherheitslogik (130) umfasst.

6. Steuer- und Datenübertragungssystem nach einem der Ansprüche 3 bis 5, wobei die Sicherheitsverarbeitung der Statusdaten und/oder der Eingangs- und/oder Ausgangsdaten das Ausführen wenigstens einer Sicherheitsfunktion umfasst.

7. Steuer- und Datenübertragungssystem nach einem der Ansprüche 3 bis 6, wobei das erste Kommunikationsnetzwerk (510) ein lokaler Bus ist und die E/A-Module (201, 202) als modulare Ein- und Ausgangsgeräte ausgebildet sind.

8. Steuer- und Datenübertragungssystem nach einem der Ansprüche 3 bis 7, wobei eine Prozesssteuerung durch eine mit dem zweiten Kommunikationsnetzwerk verbundene Steuereinrichtung und/oder durch das Gateway-Modul erfolgt.

9. Steuer- und Datenübertragungssystem nach einem der Ansprüche 3 bis 8, wobei das Gateway-Modul (100) und die E/A-Module (201, 202) dazu ausgebildet sind, zur fehlergesicherten Kommunikation Datentelegramme auszutauschen, welche eine Prüfsumme und/oder wenigstens einen Zählerwert umfassen, wobei der Zählerwert nach jedem erfolgreich übertragenen Datentelegramm inkrementiert wird.

10. Steuer- und Datenübertragungssystem nach Anspruch 9, wobei für jedes der an das erste Kommunikationsnetzwerk (510) angeschlossenen E/A-Module (201, 202) ein unterschiedlicher, individueller Zählerwert vorgesehen ist.

11. Steuer- und Datenübertragungssystem nach einem der Ansprüche 3 bis 10, wobei die Diagnoseeinheit (300, 400) wenigstens eines der E/A-Module (201, 202) Daten mit einer zugeordneten Diagnoseeinheit austauscht, welche in einer an einen Eingang oder Ausgang des E/A-Moduls (201, 202) angeschlossenen Prozesseinrichtung (600) angeordnet ist.

12. Steuer- und Datenübertragungssystem nach einem der Ansprüche 3 bis 11, wobei die Diagnoseeinheit (400) eines der E/A-Module (201, 202) und/oder eine Diagnoseeinheit einer an ein E/A-Modul angeschlossenen Prozesseinrichtung (600) mittels vom Gateway-Modul übertragener Steuerdaten steuerbar ist.

13. Verfahren zur sicheren Prozesssteuerung in einem Steuer- und Datenübertragungssystem, wobei das Steuer- und Datenübertragungssystem
- eine Mehrzahl von E/A-Modulen (201, 202), wobei jedes der E/A-Module als Eingangs- und/oder Ausgangs-Modul ausgebildet ist und einen Eingang und/oder Ausgang zum Anschließen von Sensoren und/oder Aktoren aufweist,
- ein Gateway-Modul (100),
- ein erstes Kommunikationsnetzwerk (510), und
- ein zweites, dem ersten Kommunikationsnetzwerk (510) hierarchisch übergeordnetes Kommunikationsnetzwerk (520) umfasst, wobei die Mehrzahl von E/A- Modulen (201, 202) über das erste Kommunikationsnetzwerk (510) mit dem Gateway-Modul (100) verbunden sind, und wobei das Gateway-Modul (100) mit dem zweiten, dem ersten Kommunikationsnetzwerk (510) hierarchisch übergeordneten Kommunikationsnetzwerk (520) verbunden ist und als Gateway zwischen dem ersten und zweiten Kommunikationsnetzwerk wirkt, umfassend die Schritte:
- Erzeugen von Statusdaten durch eine in wenigstens einem der E/A-Module angeordneten Diagnoseeinheit, wobei die Statusdaten Informationen betreffend den Funktionszustand eines Ein- und/oder Ausgangs des wenigstens einen E/A-Moduls zum Anschließen von Prozesseinrichtungen und/oder einer an einen Ein- oder Ausgang des wenigstens einen E/A-Moduls angeschlossenen Prozesseinrichtung umfassen,
- Ausführen einer fehlergesicherten Kommunikation zwischen dem Gateway-Modul (100) und den Eingangs- und/oder Ausgangs-Modulen (201, 202) über das erste Kommunikationsnetzwerk (510), um Statusdaten und Eingangs- und/oder Ausgangsdaten zu übertragen, und
- sicherheitsgerichtete Verarbeitung der Statusdaten und der Eingangs- und/oder Ausgangsdaten durch das Gateway-Modul (100).

14. Verfahren nach Anspruch 13, ferner umfassend den Schritt:
- Fernsteuern der Diagnoseeinheit durch das Gateway-Modul (100) durch Übertragen von Steuerdaten vom Gateway-Modul (100) zu der Diagnoseeinheit.

## Claims

1. A gateway module, comprising:
- interfaces for being connected to a first and to a second communication network, the gateway module being connectable to a plurality of I/O modules (201, 202) via the first communication network, wherein each of the I/O modules is configured as an input and/or output module and has an input and/or output for connecting sensors and/or actuators, and wherein the gateway module (100) is adapted to communicate with the I/O modules (201, 202) via the first communication network (510) in a fail-safe manner to transmit input and/or output data and to receive status data from at least one I/O module (201, 202), said status data relating to the functional state of an input and/or output for connecting sensors and/or actuators of the I/O module and/or to a sensor or actuator connected to an input or output of the I/O module; and
- a safety control unit (130) in particular in the form of a safety logic which is adapted for executing safety processing of the status data and of the input and/or output data.

2. An I/O module (201, 202), comprising:
- at least one input and/or output for connecting a process device in the form of a sensor or actuator;
- a diagnosis unit for generating status data relating to the functional state of the at least one input and/or output for connecting process devices and/or of a process device connected to the at least one input and/or output;
- an interface (210) for being connected to a communication network (510);
wherein the I/O module (201, 202) is adapted to communicate with a gateway module (100) via the communication network (510) in a fail-safe manner.

3. A control and data transfer system (10) for controlling safety-critical processes, comprising
- a plurality of I/O modules (201, 202), each of the I/O module being configured as an input and/or output module and having an input and/or an output for connecting process devices such as sensors and/or actuators, and wherein the plurality of I/O modules (201, 202) comprises at least one I/O module according to claim 2;
- a gateway module (100) according to claim 1;
- a first communication network (510); and
- a second communication network (520) at a higher hierarchical level than the first communication network (510);
wherein the plurality of I/O modules is connected to said gateway module (100) via said first communication network (510); and wherein
- the gateway module (100) is connected to the second communication network (520) that is at a higher hierarchical level than the first communication network (510), and acts as a gateway between the first and second communication networks; and
- the gateway module (100) communicates with the I/O modules (201, 202) in a fail-safe manner via the first communication network (510) to transfer status data and input and/or output data.

4. The control and data transfer system according to claim 3, wherein at least one of the I/O modules is a single-channel input module that is adapted to capture safety-related input data; and/or wherein at least one of the I/O modules is a single-channel output module that is adapted to output safety-related output data.

5. The control and data transfer system according to any one of claims 3 or 4, wherein the gateway module (100) comprises a redundantly designed safety logic (130) for executing the safe processing of the status data and/or of the input and/or output data.

6. The control and data transfer system according to any one of claims 3 to 5, wherein the safe processing of the status data and/or of the input and/or output data comprises the execution of at least one safety function.

7. The control and data transfer system according to any one of claims 3 to 6, wherein the first communication network (510) is a local bus, and wherein the I/O modules (201, 202) are in the form of modular input and output devices.

8. The control and data transfer system according to any one of claims 3 to 7, wherein process control is performed by a control unit that is connected to the second communication network, and/or by the gateway module.

9. The control and data transfer system according to any one of claims 3 to 8, wherein for the purpose of fail-safe communication the gateway module (100) and the I/O modules (201, 202) are adapted to exchange data telegrams which contain a checksum and/or at least one counter value, wherein the counter value is incremented after each successfully transmitted data telegram.

10. The control and data transfer system according to claim 9, wherein a different, individual counter value is provided for each of the I/O modules (201, 202) that are connected to the first communication network (510).

11. The control and data transfer system according to any one of claims 3 to 10, wherein the diagnosis unit (300, 400) of at least one of the I/O modules (201, 202) exchanges data with an associated diagnosis unit that is arranged in a process device (600) connected to an input or output of the I/O module (201, 202).

12. The control and data transfer system according to any one of claims 3 to 11, wherein the diagnosis unit (400) of one of the I/O module (201, 202) and/or a diagnosis unit of a process device (600) connected to an I/O module can be controlled by control data transmitted from the gateway module.

13. A method for safe process control in a control and data transfer system, which control and data transfer system comprises
- a plurality of I/O modules (201, 202), each of the I/O modules being configured as an input and/or output module and having an input and/or an output for connecting sensors and/or actuators;
- a gateway module (100);
- a first communication network (510); and
- a second communication network (520) at a higher hierarchical level than the first communication network (510), wherein the plurality of I/O modules (201, 202) is connected to the gateway module (100) via the first communication network (510), and wherein the gateway module (100) is connected to the second communication network (520) that is at a higher hierarchical level than the first communication network (510), and acts as a gateway between the first and second communication networks; comprising the steps of:
- generating status data by a diagnosis unit that is arranged in at least one of the I/O modules, wherein the status data comprise information relating to the functional state of an input and/or output of the at least one I/O module for connecting process devices and/or of a process device connected to an input or output of the at least one I/O module;
- executing fail-safe communication between the gateway module (100) and the input and/or output modules (201, 202) via the first communication network (510) to transfer status data and input and/or output data; and
- safety-related processing of the status data and/or of the input and/or output data by the gateway module (100).

14. The method according to claim 13, further comprising the step of:
- remote controlling the diagnosis unit by the gateway module (100) by transmitting control data from the gateway module (100) to the diagnosis unit.

## Revendications

1. Module de passerelle, comprenant
- des interfaces pour la connexion à un premier et à un deuxième réseau de communication, où le module de passerelle peut être relié à une pluralité de modules E/S (201, 202) par l'intermédiaire du premier réseau de communication, où chacun des modules E/S est réalisé sous la forme d'un module d'entrée et/ou de sortie et présente une entrée et/ou sortie pour la connexion de capteurs et/ou d'actionneurs, et où le module de passerelle (100) est réalisé pour communiquer de manière protégée contre les erreurs avec les modules E/S (201, 202) par l'intermédiaire du premier réseau de communication (510), afin de transmettre des données d'entrée et/ou de sortie et de recevoir des données d'état d'au moins un module E/S (201, 202), où les données d'état concernent l'état de fonctionnement d'une entrée et/ou sortie pour la connexion de capteurs et/ou d'actionneurs du module E/S et/ou un capteur ou actionneur connecté à une entrée ou sortie du module E/S, et
- une unité de commande de sécurité (130) réalisée en particulier sous la forme d'une logique de sécurité, laquelle est réalisée pour l'exécution d'un traitement de sécurité des données d'état et données d'entrée et/ou de sortie.

2. Module E/S (201, 202), comprenant
- au moins une entrée et/ou sortie pour la connexion d'un dispositif de processus réalisé sous la forme d'un capteur ou actionneur,
- une unité de diagnostic pour la génération de données d'état concernant l'état de fonctionnement de l'au moins une entrée et/ou sortie pour la connexion de dispositifs de processus et/ou d'un dispositif de processus connecté à l'au moins une entrée et/ou sortie,
- une interface (210) pour la connexion à un réseau de communication (510), où le module E/S (201, 202) est réalisé pour communiquer de manière protégée contre les erreurs avec un module de passerelle (100) par l'intermédiaire du réseau de communication (510).

3. Système de commande et de transmission de données (10) pour la commande de processus critiques pour la sécurité, comprenant
- une pluralité de modules E/S (201, 202), où chacun des modules E/S est réalisé sous la forme d'un module d'entrée et/ou de sortie et présente une entrée et/ou sortie pour la connexion de dispositifs de processus tels que des capteurs et/ou actionneurs, et où la pluralité de modules E/S (201, 202) comprend au moins un module E/S selon la revendication 2,
- un module de passerelle (100) selon la revendication 1,
- un premier réseau de communication (510), et
- un deuxième réseau de communication (520) hiérarchiquement supérieur au premier réseau de communication (510), où la pluralité de modules E/S sont reliés au module de passerelle (100) par l'intermédiaire du premier réseau de communication (510), et où
- le module de passerelle (100) est relié au deuxième réseau de communication (520) hiérarchiquement supérieur au premier réseau de communication (510) et agit comme passerelle entre le premier et deuxième réseau de communication, et
- le module de passerelle (100) communique de manière protégée contre les erreurs avec les modules E/S (201, 202) par l'intermédiaire du premier réseau de communication (510), afin de transmettre des données d'état et des données d'entrée et/ou de sortie.

4. Système de commande et de transmission de données selon la revendication 3, dans lequel au moins un des modules E/S est un module d'entrée à un canal, lequel est réalisé pour acquérir des données d'entrée orientées sécurité et/ou dans lequel au moins un des modules E/S est un module de sortie à un canal, lequel est réalisé pour délivrer des données de sortie orientées sécurité.

5. Système de commande et de transmission de données selon l'une quelconque des revendications 3 ou 4, dans lequel le module de passerelle (100) pour l'exécution du traitement de sécurité des données d'état et/ou des données d'entrée et/ou de sortie comprend une logique de sécurité (130) conçue de manière redondante.

6. Système de commande et de transmission de données selon l'une quelconque des revendications 3 à 5, dans lequel le traitement de sécurité des données d'état et/ou des données d'entrée et/ou de sortie comprend l'exécution d'au moins une fonction de sécurité.

7. Système de commande et de transmission de données selon l'une quelconque des revendications 3 à 6, dans lequel le premier réseau de communication (510) est un bus local et les modules E/S (201, 202) sont réalisés sous la forme d'appareils d'entrée et de sortie modulaires.

8. Système de commande et de transmission de données selon l'une quelconque des revendications 3 à 7, dans lequel une commande de processus s'effectue par un dispositif de commande relié au deuxième réseau de communication et/ou par le module de passerelle.

9. Système de commande et de transmission de données selon l'une quelconque des revendications 3 à 8, dans lequel le module de passerelle (100) et les modules E/S (201, 202) sont réalisés, pour la communication protégée contre les erreurs, pour échanger des datagrammes, lesquels comprennent une somme de contrôle et/ou au moins une valeur de compteur, où la valeur de compteur est incrémentée selon chaque datagramme transmis de manière réussie.

10. Système de commande et de transmission de données selon la revendication 9, dans lequel pour chacun des modules E/S (201, 202) connectés au premier réseau de communication (510) une valeur de compteur individuelle différente est prévue.

11. Système de commande et de transmission de données selon l'une quelconque des revendications 3 à 10, dans lequel l'unité de diagnostic (300, 400) d'au moins un des modules E/S (201, 202) échange des données avec une unité de diagnostic associée, laquelle est disposée dans un dispositif de processus (600) connecté à une entrée ou sortie du module E/S (201, 202).

12. Système de commande et de transmission de données selon l'une quelconque des revendications 3 à 11, dans lequel l'unité de diagnostic (400) d'un des modules E/S (201, 202) et/ou une unité de diagnostic d'un dispositif de processus (600) connecté à un module E/S peut être commandée au moyen de données de commande transmises par le module de passerelle.

13. Procédé pour la commande de processus sûre dans un système de commande et de transmission de données, où le système de commande et de transmission de données présente
- une pluralité de modules E/S (201, 202), où chacun des modules E/S est réalisé sous la forme d'un module d'entrée et/ou de sortie et présente une entrée et/ou sortie pour la connexion de capteurs et/ou actionneurs,
- un module de passerelle (100),
- un premier réseau de communication (510), et
- un deuxième réseau de communication (520) hiérarchiquement supérieur au premier réseau de communication (510), où la pluralité de modules E/S sont reliés au module de passerelle (100) par l'intermédiaire du premier réseau de communication (510), et où le module de passerelle (100) est relié au deuxième réseau de communication (520) hiérarchiquement supérieur au premier réseau de communication (510) et agit comme passerelle entre le premier et deuxième réseau de communication, comprenant les étapes consistant à :
- générer des données d'état au moyen d'une unité de diagnostic disposée dans au moins un des modules E/S, où les données d'état comprennent des informations concernant l'état de fonctionnement d'une entrée et/ou sortie de l'au moins un module E/S pour la connexion de dispositifs de processus et/ou d'un dispositif de processus connecté à une entrée ou sortie de l'au moins un module E/S,
- exécuter une communication protégée contre les erreurs entre le module de passerelle (100) et les modules d'entrée et/ou de sortie (201, 202) par l'intermédiaire du premier réseau de communication (510), afin de transmettre des données d'état et des données d'entrée et/ou de sortie, et
- traiter de manière orientée sécurité les données d'état et les données d'entrée et/ou de sortie au moyen du module de passerelle (100).

14. Procédé selon la revendication 13, comprenant en outre l'étape consistant à :
- commander à distance l'unité de diagnostic au moyen du module de passerelle (100) par transmission de données de commande du module de passerelle (100) à l'unité de diagnostic.
